# EUROPEAN PATENT SPECIFICATION

(11) **EP 0 802 007 B1**
(45) Date of publication and mention of the grant of the patent: **04.06.2003**
(21) Application number: 97103847.6
(22) Date of filing: 07.03.1997
(51) Int. Cl.: B23D 33/00, B23D 59/00, G01B 5/04

(54) **Traction head for metal bar cropping benches**
Antriebseinrichtung für eine Stabschneidvorrichtung
Dispositif de traction pour un appareil de coupe de barres

(30) Priority: 17.04.1996 IT BO960207
(43) Date of publication of application: 22.10.1997
(73) Proprietor: Schnell S.p.A., 61032 Fano (Pesaro) (IT)
(72) Inventor: Monti, Bernardino, 61039 San Costanzo (Pesaro) (IT)
(74) Representative: Modiano, Guido, Dr.-Ing.

(56) References cited:
- EP-A- 0 326 001
- US-A- 4 476 754
- US-A- 5 382 098

## Description

The present invention relates to a traction head for metal bar cropping benches according to the preamble of claim 1.

Conventionally, in the field of building, cropping benches are used which automatically crop to size the metal bars used to form reinforcement frames and the like. In particular, cropping benches are preferably used, because of their greater versatility, if it is necessary to meet different production orders, i.e., to treat bars of different sizes, as an alternative to conventional cropping lines, which are more powerful but more limited from the functional point of view.

Cropping benches are provided, at one end, with a traction head for the metal bars. The bars are usually advanced by pairs of grooved wheels, which are actuated along axes which are transverse to the advancement direction and between which said bars are clamped.

The traction head is provided with means which measure the advancement of the bars to be cut, actuating the cropping elements.

According to a known solution, the means for measuring the advancement of the bars to be cropped include a sensor of the type commonly known as encoder, associated with fixed dimensional checking elements which correct any errors in the measurement performed up to that point.

This solution provides for great precision in measurement but is relatively complicated to implement and is therefore expensive.

Another known solution provides for locators movable along the measurement axis. The locators are positioned by mechanical elements, such as chains and the like; the dimension is measured by sensors such as encoders and the like. This solution, too, achieves high precision but is very complicated and expensive and has the drawback of requiring a certain amount of time to pass from one dimension to the next.

A further known solution which is more widespread in practice provides for the use of an encoder associated with a measurement wheel which works in series with said traction wheels. However, this solution does not ensure precise measurement of the advancement of the bars, particularly in the case of bars having ridges such as those commonly used for reinforced concrete.

The ridges in fact cause vibrations in the measurement wheel which cause loss of grip, with a consequent measurement error of the encoder. This problem is obviously increased in the case of large-diameter bars fed at high speed.

A device having features as comprised in the preamble of the claims 1 and 6, is known from the document EP-A-0 326 001.

A principal aim of the present invention is to solve the above problem by providing a traction head for cropping benches which allows to precisely and continuously control the advancement of metal bars to be cropped.

Within the scope of this aim, an object of the present invention is to provide a traction head which is simple in concept, safely reliable in operation, versatile in use, and relatively inexpensive.

This aim and this object and others which will become apparent hereinafter are achieved, according to the present invention, by a traction head and bar advancement measuring means which have the features set forth in claims 1 and 6.

A method, according to the invention, for measuring bar lenghts, is characterized by the steps set forth in claim 10.

The features of the invention will become apparent from the following detailed description of a preferred embodiment of the traction head, illustrated only by way of non-limitative example in the accompanying drawings, wherein:

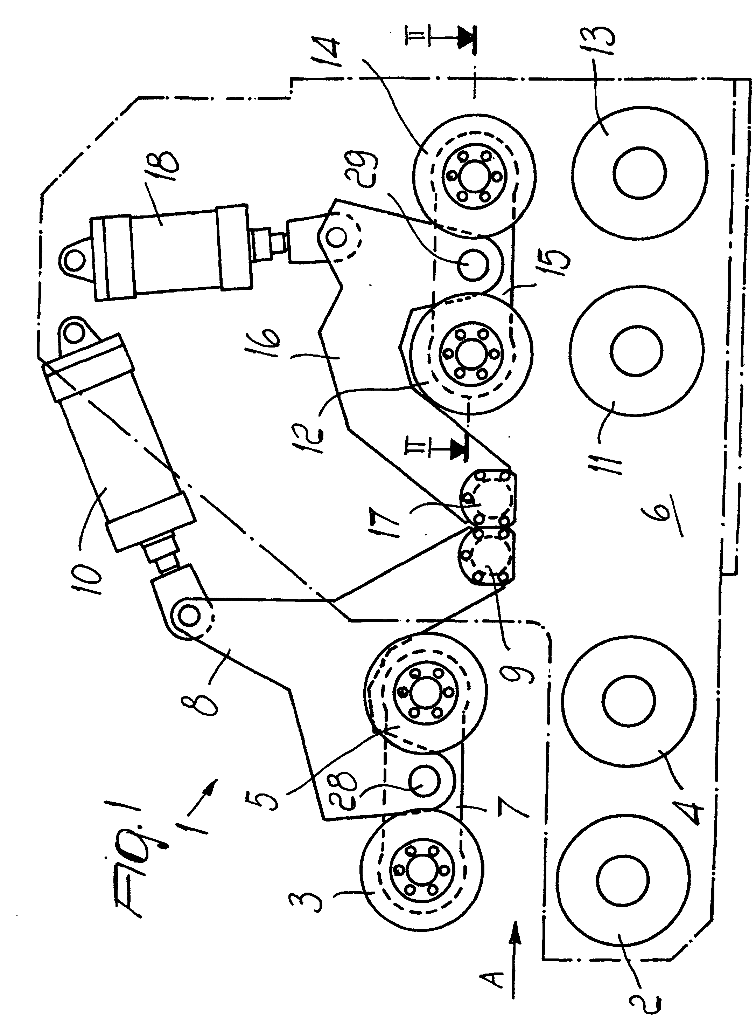

figure 1 is a longitudinal vertical sectional view of the traction head according to the present invention;
figure 2 is a horizontal sectional view of the measurement wheels of the traction head, taken along the plane II-II of figure 1.

With particular reference to the above figures, the reference numeral 1 generally designates the traction head, which is arranged at one end of a metal bar cropping bench, not illustrated in the drawing.

The head 1 has traction means for causing the advancement of the metal bars to be cropped, the traction means having a plurality of pairs of wheels actuated along axes which are transverse to the advancement direction A; the metal bars to be cropped are clamped between said pairs of wheels.

More specifically, the traction means comprise two first pairs of wheels 2, 4 and 3, 5 respectively referenced as lower and upper pairs. The lower wheels 2 and 4 are rotatably supported by a fixed frame 6 and are rotationally actuated so as to subject the metal bars to traction. The upper wheels 3 and 5 ensure an adequate clamping pressure and are supported, so that they can rotate freely, by a supporting frame 7 oscillatable about a pivot 28 and pivoted to a lever arm 8. The lever arm 8 is articulated, on a vertical plane lying longitudinally with respect to the direction A, about a pivot 9 through the actuation of an actuator 10 which is in turn pivoted to the frame 6.

In practice, the lower wheels 2 and 4 are driving wheels, whilst the upper wheels 3 and 5 act as abutments.

Downstream of the traction wheels 2, 3 and 4, 5 along the advancement direction A, there are provided two further pairs of wheels 11, 13 and 12, 14, referenced to as lower and upper wheels respectively. The lower wheels 11 and 13 are rotatably supported by the fixed frame 6, are arranged in series on the same horizontal plane as the traction wheels 2 and 4, and are actuated so as to be driving wheels like wheels 2 and 4. The wheels 2, 4 and 11, 13 are in fact connected to driving elements, not shown, by adapted transmission elements.

The upper wheels 12 and 14, meant to measure the advancement of the bar to be cropped, are supported so that they can rotate freely by a supporting frame 15 oscillatable about a pivot 29 and pivoted to a lever arm 16 which is substantially mirror-symmetrical with respect to lever 8; the lever 16 is articulated, on a vertical plane lying longitudinally with respect to the direction A, about a pivot 17 through the actuation of an actuator 18, which is in turn pivoted to the frame 6.

The measurement wheels 12 and 14, made of metallic materials, are appropriately knurled so as to prevent slippage of the bars to be cropped, compromising the measurement.

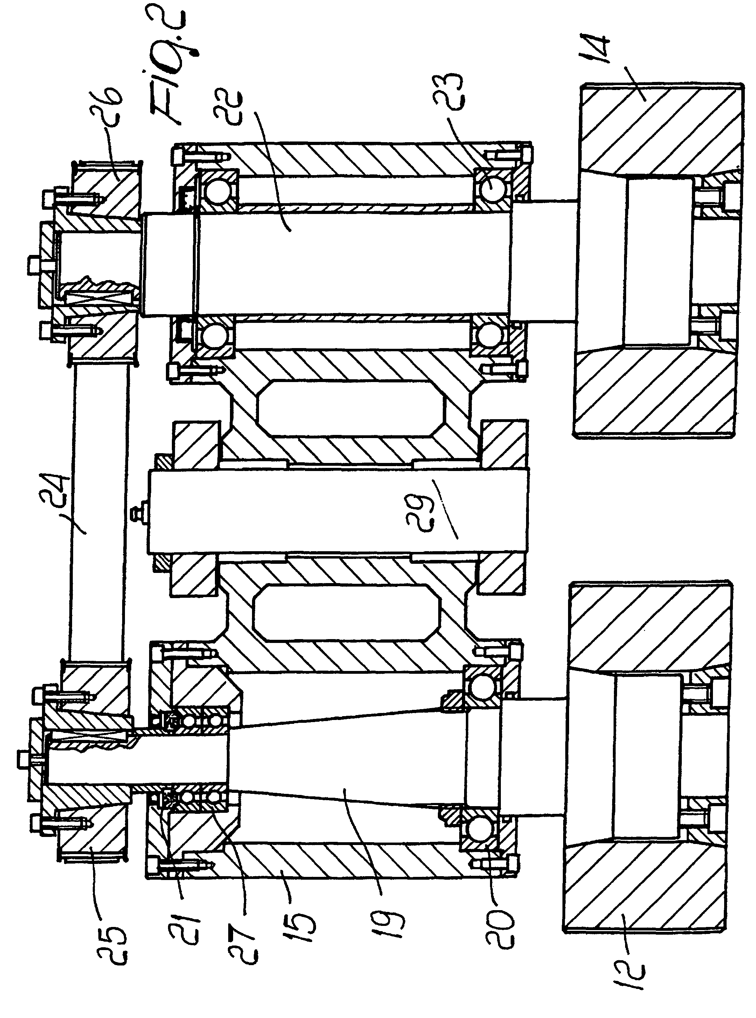

As shown in detail in figure 2, the first measurement wheel 12 is supported at the end of a shaft 19 which is mounted so that it can rotate freely, by means of rolling bearings 20, 21, and 27, in appropriate seats formed in the supporting frame 15. A rigid radial ball bearing 21, adapted to detect the advancement of the bars to be cropped, as provided for example by the company SKF as part number 6206/VU1028, and provided with a resolution of 64 pulses per turn, or other sensors such as encoders and the like, is associated with the shaft 19.

The second measurement wheel 14 is in turn supported at the end of a shaft 22 which is mounted, so that it can rotate freely by means of rolling bearings 23, 30 in a corresponding seat formed in the frame 15, with an axis which is parallel to the shaft 19 of the first measurement wheel 12.

Shafts 19 and 22 of the measurement wheels 12 and 14 are connected one another by means of a transmission chain or belt 24 appropriately provided with teeth and winding around respective pulleys 25 and 26 which are keyed on shafts 19 and 22. The pulleys 25 and 26 have the same diameter, so as to provide a unit transmission ratio.

The operation of the traction head can be easily desumed from the above description.

The metal bars to be cut are inserted in the traction head 1 above the driving wheels 2, 4 and 11, 13 and then clamped elastically by the contrast wheels 3, 5 and by the measurement wheels 12, 14 through the actuation of the corresponding actuators 10, 18; preferably, actuators 10, 18 are constituted by pneumatic cylinders adapted to ensure an elastic clamping.

The traction wheels actuate the advancement of the metal bars to be cropped in the direction A; the measurement wheels 12 and 14, turned by the advancement of said metal bars, measure the advancement of the bars, actuating, at the appropriate time, the cropping elements of the bench.

The measurement is in fact provided by the bearing 21 which senses the advancement of the bars to be cropped, which is mounted on the shaft 19 of the first measurement wheel 12. The sensor bearing 21, however, also responds to the rotation of the second measurement wheel 14, since the shaft 22 of the second measurement wheel is connected to shaft 19 by the belt transmission 24.

In practice, this allows to double the bar advancement reading points, thus preventing any loss of grip which might occur on one of the measurement wheels from affecting the reading of the sensor bearing 21, thus compromising the precision of the measurement.

In other words, if the first measurement wheel 12 loses grip on the bar, traction of the shaft 19 whereon the sensor bearing 21 is mounted is in any case ensured by the second measurement wheel 14, which is connected to shaft 19 by the belt transmission 24.

The traction head according to the invention therefore allows to continuously control the advancement of the metal bars, even if the bars have large ridges, ensuring very precise operation.

The traction head is capable, in particular, of ensuring a high operating speed without compromising bar measurement precision.

The traction head is also provided in a manner which is constructively simple, so as to achieve a proportional reduction in production and operation costs.

In the practical embodiment of the invention, the materials employed, as well as the shapes and the dimensions, may be any according to requirements.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A traction head for metal bar cropping benches, of the type comprising: pairs of traction wheels (2, 4, 11, 13) which are actuated along axes arranged transversely with respect to the advancement direction (A) of the metal bars to be cropped; pairs of clamping wheels (3, 5, 12, 14) arranged in series along said bar advancement direction (A) and adapted to provide, in cooperation with sad traction wheels (2, 4, 11, 13), clamping pressure on said metal bars; sensor means (21), associated with at least part of said clamping wheels (12, 14) acting as measurement wheels, for sensing the advancement of said bars to be cropped; and motion transmission means (24) connecting to each other said measurement wheels **characterized** is that said measurement wheels (12, 14) are supported at a supporting frame (15) so as to freely rotate only due to the advancement of said bars to be cropped, and to oscillate on directions perpendicular to said advancement direction (A) so that adequate grip of at least one of the measurement wheels (12, 14) on the advancing bars is always maintained.

2. A traction head according to claim 1, **characterized in that** said supporting frame (15) is pivoted through a pivot (29) to a lever arm (16) so as to oscillate for moving said measurement wheels along said directions perpendicular to said bar advancement direction (A), said lever arm (16) being further articulated at a further pivot (17) to oscillate, under the actuation of an actuator (18), on a vertical plane lying longitudinally to said advancement direction (A) so as to clamp said bars to be cropped on said respective traction wheels (11, 13).

3. A traction head according to any of the claims 1 or 2, **characterized in that** said measurement wheels are constituted by a first (12) and by a second (14) measurement wheels, said transmission means comprising a transmission belt (24), or equivalent, winding around a pair of pulleys (25, 26) which are keyed respectively on shafts (19, 22) of said first measurement wheel (12) and of said second measurement wheel (14), respectively.

4. A traction head according to any of the preceding claims, **characterized in that** said sensor means (21) is associatable with the shaft (19, 22) of any of said first and second measurement wheels (12, 14) and is constituted by sensors, encoders or any other suitable rotation detection means.

5. A traction head according to, any of the claims 1, 3 or 4, **characterized in that** said sensor means is associated with a rigid radial ball bearing (21) which is mounted on the shaft (19) of said first measurement wheel (12) and is supported, so that it can rotate freely, in a seat formed at said supporting frame (15) of said measurement wheels.

6. A bar advancement measuring means comprising a bar traction head as set forth in any of the claims 1-5, which has a plurality of traction wheels (2, 4, 11, 13) and clamping wheels (3, 5, 12, 14) mounted in series, opposite to each other, on axes arranged transversely with respect to the advancement direction (A) of the metal bars to 'be cropped and between which said metal bars are adapted to be clamped, said traction wheels (2, 4, 11, 13) being actuated so as to provide advancement of said bars to be cropped, the measuring means being constituted by at least part of the clamping wheels (12, 14) connected to each other by transmission means (24) and associated with sensor means (21) for sensing the advancement of said bars to be cropped **characterized in that** said measurement wheels (12, 14) are idly mounted at an adapted supporting frame (15) so as to be rotated only by advancement of said bars and to oscillate along directions which are perpendicular to said bar advancement direction (A) so that adequate grip of at least one of the measurement wheels (12, 14) on the advancing bars is always maintained.

7. A bar advancement measuring means according to claim 6, **characterized in that** said supporting frame (15) is pivoted through a pivot (29) to a lever arm (16) so as to oscillate for moving said measurement wheels along said directions perpendicular to said bar advancement direction (A), said lever arm (16) being further articulated at a further pivot (17) to oscillate, under the actuation of an actuator (18), on a vertical plane lying longitudinally to said advancement direction (A) so as to clamp said bars to be cropped on said respective traction wheels (11, 13).

8. A bar advancement measuring means according to any of the claims 6 or 7, **characterized in that** said measurement wheels are constituted by a first (12) and by a second (14) measurement wheels, said transmission means comprising a transmission belt (24), or equivalent, winding around a pair of pulleys (25, 26) which are keyed respectively on shafts (19, 22) of said first measurement wheel (12) and of said second measurement wheel (14), respectively.

9. A bar advancement measuring means according to any of the claims 6-8, **characterized in that** said sensor means (21) is associated with the shaft (19, 22) of any of said first and Second measurement wheels (12, 14) and is constituted by sensors, encoders or any other suitable rotation detection means.

10. Method for measuring the advancement of metal bars fed to a bar cropping bench by a traction head of the type as set forth in claim 1, comprising the steps of:
clamping a metal bar to be cropped between the traction (2, 4, 11, 13) and clamping (3, 5, 12, 14) wheels;
actuating said traction wheels (2, 4, 11, 13) to provide advancement of said bar along the bar advancement direction (A), while said clamping wheels (3, 5, 12, 14) are set in rotation motion only through contact with the advancing bar;
providing an adequate clamping action of the clamping wheels on the bar to be cropped, so that at least the Clamping wheels constituting the measurement wheels (12, 14), which are idly mounted at a supporting frame (15) and rotate only upon advancement of said bar, are allowed to oscillate along directions which are perpendicular to said bar advancement direction (A), whereby to ensure grip without slippage of at least one of said measurement wheels (12, 14) on the advancing bars; and
measuring the feed advancement of the bar to be cropped by continuous rotation contact of at least one of said measurement .wheels (12, 14) with said bar at at least one bar advancement reading point, the measurement wheels (12, 14) being connected to each other through motion transmission means.

## Patentansprüche

1. Zugförderkopf für Metallstangen-Abschneidebänke, von dem Typ, der Folgendes aufweist: Paare von Zugförderrädern (2, 4, 11, 13), die entlang Achsen angetrieben werden, die in Bezug auf die Vorschubrichtung (A) der abzuschneidenden Metallstangen quer angeordnet sind; Paare von Klemmrädern (3, 5, 12, 14), die entlang der Vorschubrichtung (A) in Reihe angeordnet sind und dafür eingerichtet sind, im Zusammenwirken mit den Zugförderrädern (2, 4, 11, 13) eine Klemmpressung auf den Metallstangen zu erzeugen; eine Sensoreinrichtung (21), die zu mindestens einem Teil der Klemmräder (12, 14) gehört, die als Messräder wirken, um den Vorschub der abzuschneidenden Stangen abzufühlen; und eine Bewegungstransmissionseinrichtung (24), die die Messräder miteinander verbindet, **dadurch gekennzeichnet, dass** die Messräder (12, 14) an einem Trägergestell (15) gelagert sind, um sich nur aufgrund des Vorschubs der abzuschneidenden Stangen frei zu drehen und um in Richtungen senkrecht zu der Vorschubrichtung (A) zu schwingen, so dass immer eine ausreichende Haftung mindestens eines der Messräder (12, 14) auf den vorrückenden Stangen aufrechterhalten wird.

2. Zugförderkopf nach Anspruch 1, **dadurch gekennzeichnet, dass** das Trägergestell (15) durch einen Drehpunkt (29) an einem Hebelarm (16) drehgelenkig ist, um für die Bewegung der Messräder entlang der Richtungen senkrecht zu der Stangenvorschubrichtung (A) zu schwingen, wobei der Hebelarm (16) weiterhin an einem weiteren Drehpunkt (17) gelenkig ist, um bei Betätigung eines Betätigungselementes (18) in einer Vertikalebene zu schwingen, die zu der Vorschubrichtung (A) in Längsrichtung liegt, um die abzuschneidenden Stangen auf den jeweiligen Zugförderrädern (11, 13) zu klemmen.

3. Zugförderkopf nach einem der Ansprüche 1 oder 2, **dadurch gekennzeichnet, dass** die Messräder durch ein erstes (12) und durch ein zweites (14) Messrad gebildet werden und dass die Transmissionseinrichtung einen Transmissionsriemen (24) oder ein Äquivalent aufweist, der sich um ein Paar Riemenscheiben (25, 26) windet, die jeweils auf Wellen (19, 22) des ersten Messrades (12) bzw. des zweiten Messrades (14) verkeilt sind.

4. Zugförderkopf nach einem der vorhergehenden Ansprüche, **dadurch gekennzeichnet, dass** die Sensoreinrichtung (21) zu der Welle (19, 22) eines der ersten und zweiten Messräder (12, 14) gehören kann und durch Sensoren, Codierer oder andere geeignete Drehungsnachweismittel gebildet wird.

5. Zugförderkopf nach einem der Ansprüche 1, 3 oder 4, **dadurch gekennzeichnet, dass** die Sensoreinrichtung zu einem steifen Radialkugellager (21) gehört, das auf der Welle (19) des ersten Messrades (12) montiert ist und so gelagert ist, dass sie sich in einem am Trägergestell (15) der Messräder ausgebildeten Sitz frei drehen kann.

6. Stangenvorschub-Messeinrichtung mit einem Stangen-Zugförderkopf wie in einem der Ansprüche 1 bis 5 angegeben, die mehrere Zugförderräder (2, 4, 11, 13) und Klemmräder (3, 5, 12, 14) aufweist, die in Reihe, einander gegenüberliegend, auf Achsen montiert sind, die in Bezug auf die Vorschubrichtung (A) der abzuschneidenden Metallstangen quer angeordnet sind und zwischen denen die Metallstangen eingeklemmt werden können, wobei die Zugförderräder (2, 4, 11, 13) angetrieben werden, um den Vorschub der abzuschneidenden Stangen zu erzeugen, wobei die Messeinrichtung durch mindestens einen Teil der Klemmräder (12, 14) gebildet wird, die durch eine Transmissionseinrichtung (24) miteinander verbunden sind und zu denen eine Sensoreinrichtung (21) zum Abfühlen des Vorschubs der abzuschneidenden Stangen gehört, **dadurch gekennzeichnet, dass** die Messräder (12, 14) frei laufend an einem angepassten Trägergestell (15) gelagert sind, um nur durch den Vorschub der Stangen gedreht zu werden und um entlang Richtungen zu schwingen, die senkrecht zu der Vorschubrichtung (A) sind, so dass immer eine ausreichende Haftung mindestens eines der Messräder (12, 14) auf den vorrückenden Stangen aufrechterhalten wird.

7. Stangenvorschub-Messeinrichtung nach Anspruch 6, **dadurch gekennzeichnet, dass** das Trägergestell (15) durch einen Drehpunkt (29) an einem Hebelarm (16) drehgelenkig ist, um für die Bewegung der Messräder entlang der Richtungen senkrecht zu der Stangenvorschubrichtung (A) zu schwingen, wobei der Hebelarm (16) weiterhin an einem weiteren Drehpunkt (17) gelenkig ist, um bei Betätigung eines Betätigungselementes (18) **in einer** Vertikalebene zu schwingen, die zu der Vorschubrichtung (A) in Längsrichtung liegt, um die abzuschneidenden Stangen auf den jeweiligen Zugförderrädern (11, 13) zu klemmen.

8. Stangenvorschub-Messeinrichtung nach einem der Ansprüche 6 oder 7, **dadurch gekennzeichnet, dass** die Messräder durch ein erstes (12) und durch ein zweites (14) Messrad gebildet werden und dass die Transmissionseinrichtung einen Transmissionsriemen (24) oder ein Äquivalent aufweist, der sich um ein Paar Riemenscheiben (25, 26) windet, die jeweils auf Wellen (19, 22) des ersten Messrades (12) bzw. des zweiten Messrades (14) **verkeilt** sind.

9. Stangenvorschub-Messeinrichtung nach einem der Ansprüche 6 bis 8, **dadurch gekennzeichnet, dass** die Sensoreinrichtung (21) zu der Welle (19, 22) eines der ersten und zweiten Messräder (12, 14) gehört und durch Sensoren, Codierer oder andere geeignete Drehungsnachweismittel gebildet wird.

10. Verfahren zum Messen des Vorschubs von Metallstangen, die durch einen Zugförderkopf von dem in Anspruch 1 angegebenen Typ einer Stangenabschneidebank zugeführt werden, mit folgenden Verfahrensschritten:
eine abzuschneidende Metallstange zwischen den Zugförder- (2, 4, 11, 13) und Klemmrädern (3, 5, 12, 14) einzuklemmen;
die Zugförderräder (2, 4, 11, 13) anzutreiben, um einen Vorschub der abzuschneidenden Stange entlang der Stangenvorschubrichtung (A) zu erzeugen, während die Klemmräder (3, 5, 12, 14) nur durch Kontakt mit der vorrückenden Stange in Drehbewegung versetzt werden;
eine ausreichende Klemmwirkung der Klemmräder auf die abzuschneidende Stange zu erzeugen, so dass mindestens die Klemmräder, die die Messräder (12, 14) bilden, die frei laufend an einem Trägergestell (15) gelagert sind und sich nur bei Vorschub der Stange drehen, entlang Richtungen schwingen können, die senkrecht zu der Stangenvorschubrichtung (A) sind, wodurch eine schlupffreie Haftung mindestens eines der Messräder (12, 14) auf den vorrückenden Stangen sichergestellt wird; und
den erzeugten Vorschub der abzuschneidenden Stange bei fortlaufendem Drehungskontakt mindestens eines der Messräder (12, 14) mit der Stange an mindestens einer Stangenvorschub-Lesestelle zu messen, wobei die Messräder (12, 14) durch eine Bewegungstransmissionseinrichtung miteinander verbunden sind.

## Revendications

1. Tête de traction destinée à des bancs d'éboutage de barre métallique, du type comportant :
des paires de roues de traction (2, 4, 11, 13) qui sont actionnées le long d'axes agencés transversalement par rapport à la direction d'avancée (A) des barres métalliques à ébouter ; des paires de roues de serrage (3, 5, 12, 14) agencées en série le long de ladite direction d'avancée (A) des barres et adaptées pour fournir, en coopération avec lesdites roues de traction (2, 4, 11, 13), une pression de serrage sur lesdites barres métalliques ; des moyens formant capteur (21), associés à au moins une partie desdites roues de serrage (12, 14) agissant en tant que roues de mesure, pour détecter l'avancée desdites barres à ébouter ; et des moyens de transmission de mouvement (24) reliant lesdites roues de mesure l'une à l'autre, **caractérisée en ce que** lesdites roues de mesure (12, 14) sont supportées au niveau d'un châssis de support (15), de manière à tourner librement uniquement du fait de l'avancée desdites barres à ébouter, et à osciller sur des directions perpendiculaires à ladite direction d'avancée (A), de sorte qu'une prise adéquate d'au moins une des roues de mesure (12, 14) sur les barres qui avancent est toujours maintenue.

2. Tête de traction selon la revendication 1, **caractérisée en ce que** ledit châssis de support (15) est pivoté par l'intermédiaire d'un pivot (29) vers un bras de levier (16), de manière à osciller pour déplacer lesdites roues de mesure le long desdites directions perpendiculaires à ladite direction d'avancée (A) des barres, ledit bras de levier (16) étant de plus articulé au niveau d'un pivot supplémentaire (17) pour osciller, sous l'actionnement d'un actionneur (18), sur un plan vertical s'étendant longitudinalement par rapport à ladite direction d'avancée (A), de manière à serrer lesdites barres à ébouter sur lesdites roues de traction respectives (11, 13).

3. Tête de traction selon l'une quelconque des revendications 1 ou 2, **caractérisée en ce que** lesdites roues de mesure sont constituées par une première (12) et par une seconde (14) roues de mesure, lesdits moyens de transmission comportant une courroie de transmission (24), ou analogue, s'enroulant autour d'une paire de poulies (25, 26) qui sont verrouillées respectivement sur des arbres (19, 22) de ladite première roue de mesure (12) et de ladite seconde roue de mesure (14), respectivement.

4. Tête de traction selon l'une quelconque des revendications précédentes, **caractérisée en ce que** lesdits moyens formant capteur (21) peuvent être associés à l'arbre (19, 22) de l'une quelconque desdites première et seconde roues de mesure (12, 14), et sont constitués par des capteurs, des encodeurs ou d'autres moyens de détection de rotation adaptés quelconques.

5. Tête de traction selon l'une quelconque des revendications 1, 3 ou 4, **caractérisée en ce que** lesdits moyens formant capteur sont associés à un roulement à billes radial rigide (21) qui est monté sur l'arbre (19) de ladite première roue de mesure (12), et qui est supporté, de manière à ce qu'il puisse tourner librement dans un siège formé au niveau dudit châssis de support (15) desdites roues de mesure.

6. Moyens de mesure d'avancée de barres comportant une tête de traction de barres selon l'une quelconque des revendications 1 à 5, qui a une pluralité de roues de traction (2, 4, 11, 13) et de roues de serrage (3, 5, 12, 14) montées en série, opposées les unes aux autres, sur des axes disposés transversalement par rapport à la direction d'avancée (A) des barres métalliques à ébouter, et entre lesquelles lesdites barres métalliques sont adaptées pour être serrées, lesdites roues de traction (2, 4, 11, 13) étant actionnées de manière à fournir une avancée desdites barres à ébouter, les moyens de mesure étant constitués par au moins une partie des roues de serrage (12, 14) reliées les unes aux autres par l'intermédiaire des moyens de transmission (24), et associées aux moyens formant capteur (21) pour détecter l'avancée desdites barres à ébouter, **caractérisés en ce que** lesdites roues de mesure (12, 14) sont montées folles au niveau d'un châssis de support adapté (15), de manière à être mises en rotation uniquement par l'avancée desdites barres et à osciller le long de directions qui sont perpendiculaires à ladite direction d'avancée (A) des barres, de sorte qu'une prise adéquate d'au moins une des roues de mesure (12, 14) sur les barres qui avancent est toujours maintenue.

7. Moyens de mesure d'avancée de barres selon la revendication 6, **caractérisés en ce que** ledit châssis de support (15) est pivoté par l'intermédiaire d'un pivot (29) vers un bras de levier (16), de manière à osciller pour déplacer lesdites roues de mesure le long desdites directions perpendiculaires à ladite direction d'avancée (A) des barres, ledit bras de levier (16) étant articulé en outre au niveau d'un pivot supplémentaire (17) pour osciller, sous l'actionnement d'un actionneur (18), sur un plan vertical s'étendant longitudinalement par rapport à ladite direction d'avancée (A), de manière à serrer lesdites barres à ébouter sur lesdites roues de traction respectives (11, 13).

8. Moyens de mesure d'avancée de barres selon l'une quelconque des revendications 6 ou 7, **caractérisés en ce que** lesdites roues de mesure sont constituées par une première (12) et une seconde (14) roues de mesure, lesdits moyens de transmission comportant une courroie de transmission (24), ou analogue, s'enroulant autour d'une paire de poulies (25, 26) qui sont verrouillées respectivement sur des arbres (19, 22) de ladite première roue de mesure (12) et de ladite seconde roue de mesure (14), respectivement.

9. Moyens de mesure d'avancée de barres selon l'une quelconque des revendications 6 à 8, **caractérisés en ce que** lesdits moyens formant capteur (21) sont associés à l'arbre (19, 22) de l'une quelconque desdites première et seconde roues de mesure (12, 14), et sont constitués par des capteurs, des encodeurs ou d'autres moyens de détection de rotation adaptés quelconques.

10. Procédé pour mesurer l'avancée de barres métalliques alimentées vers un banc d'éboutage de barres par une tête de traction du type tel que décrit dans la revendication 1, comportant les étapes suivantes :
serrer une barre métallique à ébouter entre les roues de traction (2, 4, 11, 13) et de serrage (3, 5, 12, 14),
actionner lesdites roues de traction (2, 4, 11, 13) pour fournir une avancée de ladite barre le long de la direction d'avancée (A) des barres, tandis que lesdites roues de serrage (3, 5, 12, 14) sont mises en rotation uniquement par l'intermédiaire d'un contact avec la barre qui avancent ; fournir une action de serrage adéquate des roues de serrage sur la barre à ébouter, de sorte qu'au moins les roues de blocage qui constituent les roues de mesure (12, 14), qui sont montées folles sur un châssis de support (15) et qui tournent uniquement lors de l'avancée de ladite barre, peuvent osciller le long de directions qui sont perpendiculaires à ladite direction d'avancée (A) des barres, assurant ainsi une saisie sans glissement d'au moins une desdites roues de mesure (12, 14) sur les barres qui avancent, et
mesurer l'avancée d'alimentation de la barre à ébouter par un contact en rotation continue d'au moins une desdites roues de mesure (12, 14) avec ladite barre au niveau d'au moins un point de lecture d'avancée de barre, les roues de mesure (12, 14) étant reliées l'une à l'autre par l'intermédiaire de moyens de transmission de mouvement.
